(19) Europäisches Patentamt / European Patent Office / Office européen des brevets

(11) **EP 2 230 459 B1**

(12) **EUROPEAN PATENT SPECIFICATION**

(45) Date of publication and mention
of the grant of the patent:
**12.04.2017 Bulletin 2017/15**

(21) Application number: **08868158.0**

(22) Date of filing: **25.12.2008**

(51) Int Cl.:
*F23R 3/30* $^{(2006.01)}$    *F02C 7/228* $^{(2006.01)}$
*F02C 7/232* $^{(2006.01)}$    *F23R 3/28* $^{(2006.01)}$
*F23R 3/32* $^{(2006.01)}$    *F23R 3/34* $^{(2006.01)}$
*F23R 3/42* $^{(2006.01)}$    *F23R 3/54* $^{(2006.01)}$
*F23R 3/46* $^{(2006.01)}$

(86) International application number:
**PCT/JP2008/073602**

(87) International publication number:
**WO 2009/084587 (09.07.2009 Gazette 2009/28)**

(54) **COMBUSTOR OF GAS TURBINE**

BRENNKAMMER EINER GASTURBINE

CHAMBRE DE COMBUSTION DE TURBINE À GAZ

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **27.12.2007 JP 2007337228**

(43) Date of publication of application:
**22.09.2010 Bulletin 2010/38**

(73) Proprietor: **Mitsubishi Heavy Industries, Ltd. Tokyo 108-8215 (JP)**

(72) Inventors:
• **SAITO, Keijiro**
**Takasago, Hyogo-ken 676-8686 (JP)**
• **YUASA, Atsushi**
**Takasago, Hyogo-ken 676-8686 (JP)**

• **TANIMURA, Satoshi**
**Takasago, Hyogo-ken 676-8686 (JP)**

(74) Representative: **Henkel, Breuer & Partner Patentanwälte**
**Maximiliansplatz 21**
**80333 München (DE)**

(56) References cited:
**EP-A1- 0 281 961      JP-A- 5 052 125**
**JP-A- 7 233 945       JP-A- 8 210 640**
**JP-A- 8 226 649       JP-A- 9 166 326**
**JP-A- 10 318 541      JP-A- 2000 329 346**
**JP-A- 2003 090 535    US-A- 4 204 402**
**US-A- 4 603 548       US-A- 5 069 029**
**US-A- 5 321 948       US-A- 5 323 614**
**US-B1- 6 418 725**

**Description**

TECHNICAL FIELD

The present invention relates to a combustor of a gas turbine, and, more particularly to a combustor of a gas turbine capable of suppressing generation of combustion oscillation.

BACKGROUND ART

A typical combustor of a gas turbine includes an premixed gas generator (swirler) that produces combustion flame, an inner cylinder that has therein the premixed gas generator, and a transition piece that connects the inner cylinder to an inlet of a turbine.

A combustor of a gas turbine having this configuration is known as a conventional technique and disclosed in JP 2006-300448 A. In the conventional combustor of the gas turbine, an inner cylinder is connected to a transition piece. An inner swirler and an outer swirler are placed within the inner cylinder. The inner swirler includes: a cylindrical inner swirler ring arranged concentrically about a central axis of the inner cylinder; and a plurality of inner swirler vanes provided on an outer circumferential surface of the inner swirler ring. The outer swirler includes: a cylindrical outer swirler ring arranged on an outer circumferential side of the inner swirler vanes and concentrically with the inner swirler ring; and a plurality of outer swirler vanes provided on an outer circumferential surface of the outer swirler ring.

EP 0281961 A1 discloses a combustor of a gas turbine comprising inner and outer premixed gas generator outlets. The inner circumferential wall surfaces of the premixed gas generators also have a radial outward part that is extended, in an axial direction, further than a part of the inner wall surface that is located radially inward. The extension of the radial outward part is relatively short so that a more or less conical or flaring outlet section is created. The radial outward part does not extend up to a step provided at a position that is only slightly upstream of a tip of the combustion flame formed in front of the respective premixed gas generator outlet.

US 6418725 B1 discloses a structure of a combustor where the various premixed gas generator outlets are bent by about 90° just before they open into the combustion space.

DISCLOSURE OF INVENTION

PROBLEM TO BE SOLVED BY THE INVENTION

The conventional combustor of the gas turbine has an issue of suppressing generation of combustion oscillation caused by concentrated heat generation.

An object of the present invention is to provide a combustor of a gas turbine capable of suppressing generation of combustion oscillation.

MEANS FOR SOLVING PROBLEM

According to the present invention, a combustor of a gas turbine includes the features of claim 1. The combustor has premixed gas generators that produce a combustion flame; an inner cylinder that has therein the premixed gas generators; and a transition piece that connects the inner cylinder to an inlet of a turbine. A premixed gas generator outlet of the premixed gas generators has an inner wall surface, and a part of the inner wall surface, located outward in a radial direction of the combustor, is extended further in an axial direction of the combustion flame than a part of the inner wall surface, located inward in the radial direction of the combustor.

In the combustor of the gas turbine, the part of the inner wall surface of the premixed gas generator outlet of the premixed gas generators, located outward in the radial direction of the combustor, is extended further in the axial direction of the combustion flame than the radially-inward part of the inner wall surface. According to this configuration, the combustion flame extends from the premixed gas generator smoothly along the extended radially-outward part of the inner wall surface. Thus, the combustion flame is dispersed in the axial direction of the transition piece 32, so that the combustion flame is stabilized. This provides an advantage of suppressing generation of combustion oscillation.

In the combustor of a gas turbine, the combustor has at least a pair of the premixed gas generators including an inner premixed gas generator and an outer premixed gas generator, the inner premixed gas generator is placed inward of the outer premixed gas generator in the radial direction of the combustor, and an premixed gas generator outlet of the inner premixed gas generator is located upstream of an premixed gas generator outlet of the outer premixed gas generator in the axial direction of the combustor.

In the combustor of the gas turbine, the premixed gas generator outlet of the inner premixed gas generator and the premixed gas generator outlet of the outer premixed gas generator are placed at different positions from each other in the axial direction of the combustor. Consequently, a total length of the combustion flame increases. This causes the combustion flame to generate heat at distributed positions, and thus provides an advantage of suppressing generation of combustion oscillation. For example, if the premixed gas generator outlet of the inner premixed gas generator and the premixed gas generator outlet of the outer premixed gas generator are at the same position in the axial direction of the combustor, the combustion flame causes concentrated heat generation, and thus combustion oscillation tend to be generated.

Advantageously, in the combustor of a gas turbine, a distance L between the outer premixed gas generator and the inlet of the turbine and a distance L1 between the premixed gas generator outlet of the inner premixed gas generator and the premixed gas generator outlet of the outer premixed gas generator have a relationship expressed as 0.2≦L1/L.

In the combustor of the gas turbine, the distance L1 between the premixed gas generator outlet of the inner premixed gas generator and the premixed gas generator outlet of the outer premixed gas generator is predetermined appropriately. This causes heat generated by the combustion flame to be effectively dispersed, and thus provides an advantage of suppressing generation of combustion oscillation.

In the combustor of a gas turbine, the part of the inner wall surface of the premixed gas generator outlet of the premixed gas generator, located outward in the radial direction of the combustor, has a diameter that increases in a stepped manner at a location of a distal end of the combustion flame.

In the combustor of the gas turbine, a step is provided at a location of the distal end of the combustion flame, so that a position of the distal end of the combustion flame is clarified. According to this configuration, a combustion gas circulation area is created at the distal end of the combustion flame. This provides an advantage of stabilizing the combustion flame.

EFFECT OF THE INVENTION

In the combustor of the gas turbine according to the present invention, a part of an inner wall surface of the premixed gas generator outlet of the premixed gas generator, which is located outward in a radial direction of the combustor, is extended further in an axial direction of the combustion flame than a part of the inner wall surface, which is located inward in the radial direction of the combustor. According to this configuration, the combustion flame extends from the premixed gas generator smoothly along the extended radially-outward part of the inner wall surface. Thus, the combustion flame is dispersed in the axial direction of the transition piece 32, so that the combustion flame is stabilized. This provides an advantage of suppressing generation of combustion oscillation.

BRIEF DESCRIPTION OF DRAWINGS

[Fig. 1] Fig. 1 is a configuration diagram of a combustor of a gas turbine according to an example serving to explain certain features of the present invention.
[Fig. 2] Fig. 2 is an explanatory diagram of an operation of the combustor of the gas turbine shown in Fig. 1.
[Fig. 3] Fig. 3 is an explanatory diagram of a modification of the combustor of the gas turbine shown in Fig. 1 which is an embodiment of the present invention.
[Fig. 4] Fig. 4 is an explanatory diagram of a modification of the combustor of the gas turbine shown in Fig. 1.
[Fig. 5] Fig. 5 is an explanatory diagram of a modification of the combustor of the gas turbine shown in Fig. 1.
[Fig. 6] Fig. 6 is an explanatory diagram of a modification of the combustor of the gas turbine shown in Fig. 1.
[Fig. 7] Fig. 7 is an explanatory diagram of a modification of the combustor of the gas turbine shown in Fig. 1.
[Fig. 8] Fig. 8 is an explanatory diagram of a modification of the combustor of the gas turbine shown in Fig. 1.
[Fig. 9] Fig. 9 is a configuration diagram of a general gas turbine.
[Fig. 10] Fig. 10 is a configuration diagram of a combustor of the gas turbine shown in Fig. 9.

EXPLANATIONS OF LETTERS OR NUMERALS

| 1: | gas turbine |
| 2: | compressor |
| 21: | casing |
| 3: | combustor |
| 31: | inner cylinder |
| 32: | transition piece |
| 321: | step |
| 33: | inner premixed gas generator |
| 331: | swirler vane |
| 332: | fuel injector |
| 333: | premixed gas generator outlet |
| 334: | premixed gas generator outlet |
| 34: | outer premixed gas generator |
| 341: | swirler vane |
| 342: | fuel injector |
| 343: | premixed gas generator outlet |
| 35: | swirler ring |
| 36: | premixed gas generator outlet |
| 4: | turbine |
| 41: | inlet |
| 5: | rotor |

BEST MODE(S) FOR CARRYING OUT THE INVENTION

The present invention will be explained in detail below with reference to the accompanying drawings.

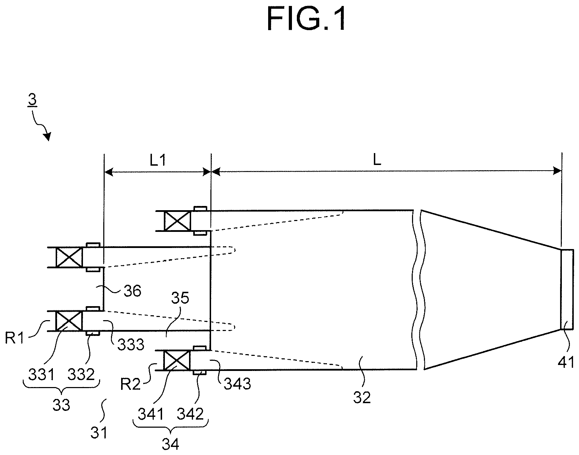

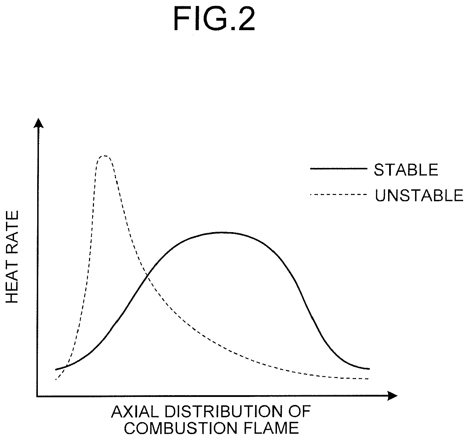

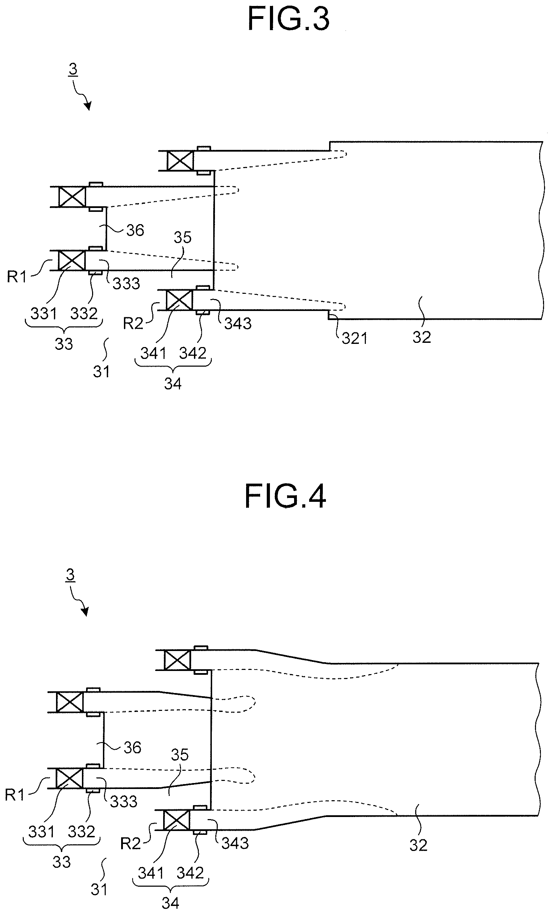

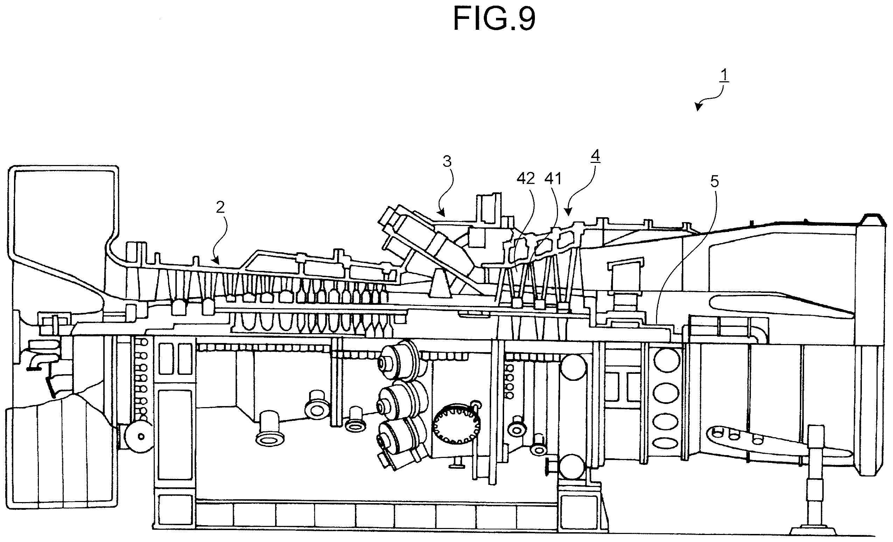

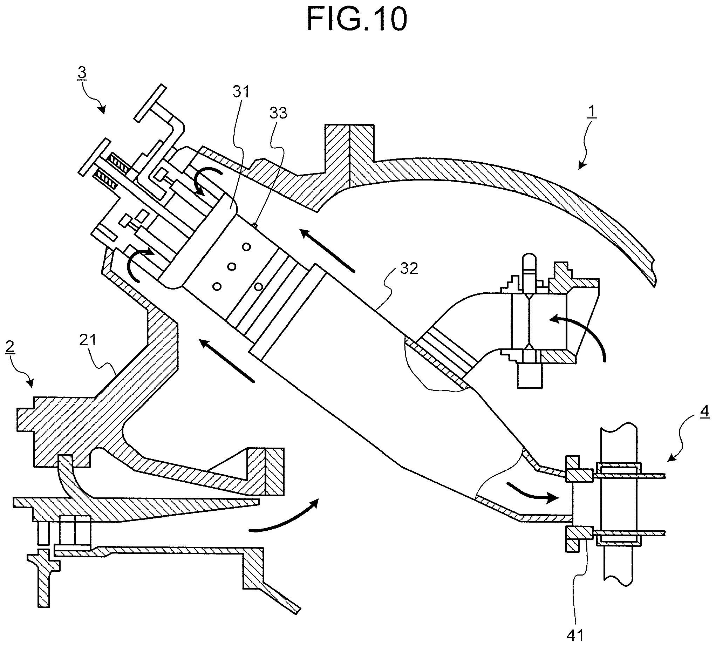

Fig. 1 is a configuration diagram of a combustor of a gas turbine according to an example serving to explain certain features of the present invention. Fig. 2 is an explanatory diagram of an operation of the combustor shown in Fig. 1. Figs. 3 to 8 are explanatory diagrams of modifications of the combustor of the gas turbine shown in Fig. 1. Fig. 9 is a configuration diagram of a general gas turbine. Fig. 10 is a configuration diagram of a combustor of the gas turbine shown in Fig. 9.

[Gas Turbine]

A gas turbine 1 has a compressor 2, a combustor 3, and a turbine 4 (see Fig. 9). The compressor 2 compresses air introduced from an air intake to produce compressed air. The combustor 3 sprays fuel into the compressed air to produce high-temperature, high-pressure combustion gas. The turbine 4 converts thermal energy of the combustion gas into rotational energy for a rotor 5 to cause the rotor 5 to produce a driving force. The driving force is transmitted to a generator (not shown) connected to the rotor 5.

[Combustor of Gas Turbine]

The combustor 3 is provided at the rear of an outlet of the compressor 2 and in front of an inlet of the turbine 4 (see Figs. 9 and 10). A plurality of the combustors 3 are annularly arranged in a circumferential direction of the turbine 4. Each of the combustors 3 has an inner cylinder 31, a transition piece 32, and premixed gas generators (swirlers) 33 and 34 (see Fig. 1). The inner cylinder 31 is a cylindrical member that defines a combustion chamber of the combustor 3. The inner cylinder 31 is provided fixedly to a casing 21 of the compressor 2. The transition piece 32 is a cylindrical member that connects the inner cylinder 31 to an inlet 41 of the turbine 4. The premixed gas generators 33 and 34 are placed within the inner cylinder 31 to produce combustion flame.

In the combustor 3, air compressed by the compressor 2 (compressed air) is introduced into the inner cylinder 31 of the combustor 3, and is supplied to the premixed gas generators 33 and 34. The premixed gas generators 33 and 34 mix the compressed air with fuel to produce combustion flame. High-temperature and high-pressure combustion gas produced by the combustion flame is supplied to the turbine 4 through the transition piece 32.

[Premixed gas generator of Combustor]

The premixed gas generator 33 (34) of the combustor 3 has a swirler vane 331 (341) and a fuel injector 332 (342) (see Fig. 1). The swirler vane 331 (341) is placed on a compressed air passage R1 (R2) to swirl the compressed air. The passage R1 (R2) is formed inside of the inner cylinder 31. The fuel injector 332 (342) is placed on the compressed air passage R1 (R2) and downstream of the swirler vane 331 (341) to spray fuel into the compressed air.

In the combustor 3, the premixed gas generators 33 and 34 have a dual structure (double-swirler structure) (see Fig. 1). For example, in the present example, the combustor 3 has the inner premixed gas generator 33 and the outer premixed gas generator 34 inside of the inner cylinder 31. These premixed gas generators 33 and 34 both have an annular structure and are arranged concentrically about a central axis of the inner cylinder 31. The outer premixed gas generator 34 is placed outward of the inner premixed gas generator 33 in a radial direction of the inner cylinder 31 (surrounding an outer circumference of the inner premixed gas generator 33). The inner premixed gas generator 33 and the outer premixed gas generator 34 are placed with a cylindrical swirler ring 35 interposed therebetween.

In the premixed gas generator 33 (34), when the compressed air passes through the swirler vane 331 (341) on the passage R1 (R2), a swirling flow of the compressed air is formed (see Fig. 1). The fuel injector 332 (342) sprays fuel into the swirling flow to form air-fuel mixture. The air-fuel mixture is burnt, thus producing combustion flame. An amount of the fuel to be sprayed from the fuel injector 332 (342) is adjusted such that the combustion flame produced in the inner premixed gas generator 33 is in a fuel-rich condition (rich combustion flame), while the combustion flame produced in the outer premixed gas generator 34 is in a fuel-lean condition (lean flame). Thus, the rich combustion flame (combustion flame from the inner premixed gas generator 33) is formed in a central area of the transition piece 32, while the lean combustion flame (combustion flame from the outer premixed gas generator 34) is formed in an area near a wall surface of the transition piece 32. In the central area of the transition piece 32, the rich combustion flame causes a flame surface temperature to decrease. This reduces an amount of NOx generated. In the area near the wall surface of the transition piece 32 where the fuel-lean combustion flame is formed, a temperature of the fuel gas is low. This results in a small amount of NOx generated. Consequently, a total amount of NOx generated in the combustor 3 is reduced.

In the present example, the fuel injector 332 (342) is placed downstream of the swirler vane 331 (341). Such a configuration is preferable because a backfire of the combustion flame (particularly, lean combustion flame) is prevented. However, the present invention is not limited to this configuration, and the fuel injector 332 (342) can be placed upstream of the swirler vane 331 (341).

[Combustion Oscillation Reducing Structure]

In the combustor 3, a part of an inner wall surface of an premixed gas generator outlet 333 (343) of the premixed gas generator 33 (34), which is located outward in a radial direction of the combustor 3, is extended further in an axial direction of the combustion flame than a part of the inner wall surface, which is located inward in the radial direction of the combustor, to reduce combustion oscillation (see Fig. 1). More specifically, at the premixed gas generator outlet 333 (343) of the premixed gas generator 33 (44), the radially-outward part of the inner wall surface of the combustor 3 extends steplessly in the axial direction of the combustion flame (in the axial direction of the transition piece 32). According to such a configuration, the combustion flame exiting from the premixed gas generator outlet 333 (343) extends smoothly along the extended radially-outward part of the inner wall surface. The combustion flame is then dispersed in the axial direction of the transition piece 32, so that the combustion flame is stabilized (see Fig. 2). This suppresses generation of combustion oscillation. In Fig. 1, a flame surface of the combustion flame is shown by broken lines.

For example, as described above, in the present example, the compressed air passage R1 (R2) is formed in the inner cylinder 31, and the swirler vane 331 (341) is placed on the compressed air passage R1 (R2) (see Fig. 1). The fuel injector 332 (342) is formed on the compressed air passage R1 (R2) and downstream of the swirler vane 331 (341), thereby forming the premixed gas generator 33 (34).

The inner premixed gas generator 33 has an annular structure with a premixed gas generator outlet 36 located at the center of the annular structure. More specifically, the premixed gas generator outlet 36 forms a part of a wall surface of the compressed air passage R1 of the inner premixed gas generator 33, located inward in the radial direction of the combustor 3. The inner premixed gas generator 33 and the outer premixed gas generator 34 are placed with the swirler ring 35 interposed therebetween. That is, an inner circumferential surface of the swirler ring 35 forms a part of the wall surface of the compressed air passage R1 of the inner premixed gas generator 33, located outward in the radial direction of the combustor 3. Thus, in the inner premixed gas generator 33, the combustion flame is held at an end of the premixed gas generator outlet 36 (at an end downstream of the air-fuel mixture). Therefore, the end of the premixed gas generator outlet 36 forms the premixed gas generator outlet 333 of the inner premixed gas generator 33. The inner circumferential surface of the swirler ring 35 extends downstream of the air-fuel mixture relative to the end of the premixed gas generator outlet 36. Thus, the part of the inner wall surface of the premixed gas generator outlet 333 of the inner premixed gas generator 33, located outward in the radial direction of the combustor 3, is extended further in the axial direction of the combustion flame than the radially-inward part of the inner wall surface.

More specifically, an outer circumferential surface of the swirler ring 35 forms a part of a wall surface of the compressed air passage R2 of the outer premixed gas generator 34, located inward in the radial direction of the combustor 3. An inner wall surface of the inner cylinder 31 (or an inner wall surface of the transition piece 32) forms a part of the wall surface of the compressed air passage R2 of the outer premixed gas generator 34, located outward in the radial direction of the combustor 3. Thus, in the outer premixed gas generator 34, the combustion flame is held at an end of the swirler ring 35 (at an end downstream of the air-fuel mixture). Therefore, the end of the swirler ring 35 forms the premixed gas generator outlet 343 of the outer premixed gas generator 34. The inner wall surface of the inner cylinder 31 (or the inner wall surface of the transition piece 32) extends downstream of the air-fuel mixture relative to the end of the swirler ring 35. Thus, the part of the inner wall surface of the premixed gas generator outlet 343 of the premixed gas generator 34, located outward in the radial direction of the combustor 3, is extended further in the axial direction of the combustion flame than the radially-inward part of the inner wall surface.

In the present example, the inner wall surface of the inner cylinder 31 is flush with the inner wall surface of the transition piece 32.

In the combustor 3, to suppress combustion oscillation, the premixed gas generator outlet 333 of the inner premixed gas generator 33 is located upstream of the premixed gas generator outlet 343 of the outer premixed gas generator 34 in the axial direction of the combustor 3 (upstream in the flow direction of the combustion gas) (see Fig. 1). That is, in an axial sectional view of the combustor 3, the premixed gas generator outlet 333 of the inner premixed gas generator 33 is shifted upstream in the axial direction of the combustor 3 with respect to the outer premixed gas generator 34. According to this configuration, the premixed gas generator outlet 333 of the inner premixed gas generator 33 and the premixed gas generator outlet 343 of the outer premixed gas generator 34 are placed at different positions from each other in the axial direction of the combustor 3. Consequently, the total length of the combustion flame increases. This causes the combustion flame to generate heat at distributed positions, and thus suppresses generation of combustion oscillation.

For example, in the present example, the premixed gas generator outlet 333 of the inner premixed gas generator 33 is pulled down toward the upstream side in the axial direction of the combustor 3, and is placed at a deep position in the swirler ring 35 (see Fig. 1). Therefore, the premixed gas generator outlet 333 of the inner premixed gas generator 33 is located upstream of the premixed gas generator outlet 343 of the outer premixed gas generator 34 in the axial direction of the combustor 3.

[Effects]

As described above, in the combustor 3 of the gas turbine, the part of the inner wall surface of the premixed gas generator outlet 333 (343) of the premixed gas generator 33 (34), located outward in the radial direction of the combustor 3, is extended further in the axial direction of the combustion flame than the radially-inward part of the inner wall surface (see Fig. 1). According to this configuration, the combustion flame extends from the premixed gas generator 33 (34) smoothly along the extended radially-outward part of the inner wall surface. Thus, the combustion flame is dispersed in the axial direction of the transition piece 32, so that the combustion flame is stabilized (see Fig. 2). This provides an advantage of suppressing generation of combustion oscillation. For example, if the premixed gas generator outlet of the premixed gas generator is not extended further (if the radially-outward part and the radially-inward part of the inner wall surface of the combustor 3 are at the same position, and a step is created on the radially-outward part of the inner wall surface), the combustion flame is separated from the wall surface at the premixed gas generator outlet. Consequently, a flow rate of the combustion flame decreases. Thus, the combustion flame causes concentrated heat generation, and therefore combustion oscillation tends to be generated.

In the present example, the combustor 3 has a pair of the premixed gas generators 33 and 34, and the premixed gas generators 33 and 34 have a dual structure (a double swirler structure) (see Fig. 1).

Preferably, in the combustor 3 of the gas turbine in which the premixed gas generators 33 and 34 have the dual structure, the premixed gas generator outlet 333 of the inner premixed gas generator 33 is located upstream of the premixed gas generator outlet 343 of the outer premixed gas generator 34 in the axial direction of the combustor 3 (see Fig. 1). According to this configuration, the premixed gas generator outlet 333 of the inner premixed gas generator 33 and the premixed gas generator outlet 343 of the outer premixed gas generator 34 are placed at different positions from each other in the axial direction of the combustor 3. Consequently, the total length of the combustion flame increases. This causes the combustion flame to generate heat at distributed positions, and thus provides an advantage of suppressing generation of combustion oscillation. For example, if the premixed gas generator outlet of the inner premixed gas generator and the premixed gas generator outlet of the outer premixed gas generator are at the same position in the axial direction of the combustor, the combustion flame causes concentrated heat generation, and thus combustion oscillation tends to be generated.

Preferably, in the configuration described above, a distance L between the outer premixed gas generator 34 and the inlet 41 of the turbine 4 (first-stage stator vanes of the turbine 4) and a distance L1 between the premixed gas generator outlet 333 of the inner premixed gas generator 33 and the premixed gas generator outlet 343 of the outer premixed gas generator 34 have a relationship expressed as $0.2 \leq L1/L$ (see Fig. 1). According to this configuration, the distance L1 between the premixed gas generator outlet 333 of the inner premixed gas generator 33 and the premixed gas generator outlet 343 of the outer premixed gas generator 34 is predetermined appropriately. This causes heat generated by the combustion flame to be effectively dispersed, and thus provides an advantage of suppressing generation of combustion oscillation.

In the configuration described above, an upper limit of a range of L1/L is defined according to a length of the combustion flame produced in the inner premixed gas generator 33. For example, in the present example, the distance L1 between the premixed gas generator outlet 333 of the inner premixed gas generator 33 and the premixed gas generator outlet 343 of the outer premixed gas generator 34 is defined such that a distal end of the combustion flame produced in the inner premixed gas generator 33 reaches a flame holding position for the combustion flame produced in the outer premixed gas generator 34 (the end of the swirler ring 35). According to this configuration, the combustion flame produced in the inner premixed gas generator 33 and the combustion flame produced in the outer premixed gas generator 34 continues in the axial direction of the combustor. This results in efficient combustion.

[Shape of Inner Wall Surface of Transition piece]

In the combustor 3 of the gas turbine, an inner diameter of the transition piece 32 is predetermined to be substantially uniform in an area where the combustion flame produced in the premixed gas generators 33 and 34 extends (see Fig. 1). Such a configuration is preferable in view of facilitating design and manufacture of the transition piece 32.

However, according to the present invention, the part of the inner wall surface of the premixed gas generator outlet 333 (343) of the premixed gas generator 33 (34), located outward in the radial direction of the combustor 3, has an inner diameter that increases in a stepped manner at a location of the distal end of the combustion flame (see Fig. 3). That is, a step is provided at the location of the distal end of the combustion flame, so that the position of the distal end of the combustion flame is clarified. According to this configuration, a combustion gas circulation area is created at the distal end of the combustion flame, which advantageously stabilizes the combustion flame.

For example, in the present embodiment, the inner wall surface of the transition piece 32 linearly extends from the premixed gas generator outlet 343 of the outer premixed gas generator 34 in the axial direction of the transition piece 32, and has a diameter enlarged in a stepped manner at the location of the distal end of the combustion flame (see Fig. 3). Specifically, a step 321 is provided at a position slightly upstream of a tip of the combustion flame, so that the wall surface of the transition piece 32 is widened in a stepped manner. Therefore, the combustion gas circulation area is created at the distal end of the combustion flame. In the inner premixed gas generator 33, the swirler ring 35 constitutes a similar step. That is, at the distal end of the combustion flame produced in the inner premixed gas generator 33, an edge of the swirler ring 35 is located and a combustion gas circulation area is created.

According to another example which is not in accordance with the invention as claimed, in the combustor 3 of the gas turbine, the part of the inner wall surface of the premixed gas generator outlet 333 (343) of the premixed gas generator 33 (34), located outward in the radial direction of the combustor 3, has a decreasing inner diameter (see Fig. 4). According to this configuration, the inner wall surface with the decreasing inner diameter results in an increase in moving speed of the combustion flame (flame surface), and thus results in longer combustion flame. This causes the combustion flame to be distributed and stabilized in the axial direction of the transition piece 32, and thus provides an advantage of suppressing generation of combustion oscillation.

In this example the combustion flame produced in the inner premixed gas generator 33 moves along the inner circumferential surface of the swirler ring 35 (see Fig. 4). An inner diameter of the swirler ring 35 gradually decreases, and thus an inner wall surface of the swirler ring 35 is formed into an inwardly narrowing shape. This configuration increases the moving speed of the combustion flame produced in the inner premixed gas generator 33. In the present example, the combustion flame produced in the outer premixed gas generator 34 moves along the inner wall surface of the transition piece 32. An inner diameter of the transition piece 32 gradually decreases, and thus an inner wall surface of the transition piece 32 is formed into an inwardly narrowing shape. This configuration increases the moving speed of the combustion flame produced in the outer premixed gas generator 34.

In the configuration described above, on the inner wall surface of the premixed gas generator 33 (34), the inner diameter can start decreasing at any point. For example, in the present example, on the inner wall surface of the swirler ring 35 and on the inner wall surface of the transition piece 32 (inner wall surface of the premixed gas generator 33 (34)), each inner diameter starts gradually decreasing at a longitudinally midway point of the combustion flame.

In the combustor 3 of the gas turbine, the transition piece 32 can have a tapered shape or an envelope shape in the area where the combustion flame produced in the premixed gas generators 33 and 34 extends, thereby to moderately increase the inner diameter of the transition piece 32 toward the downstream side of the combustion flame (not shown). In this case, the inner wall surface of the transition piece 32 is inclined with respect to the central axis of the transition piece 32 preferably at an angle equal to or lower than 5 degrees, more preferably at an angle equal to or lower than 7 degrees, and furthermore preferably at an angle equal to or lower than 15 degrees. This ensures appropriate combustion of the combustion flame.

[Modification]

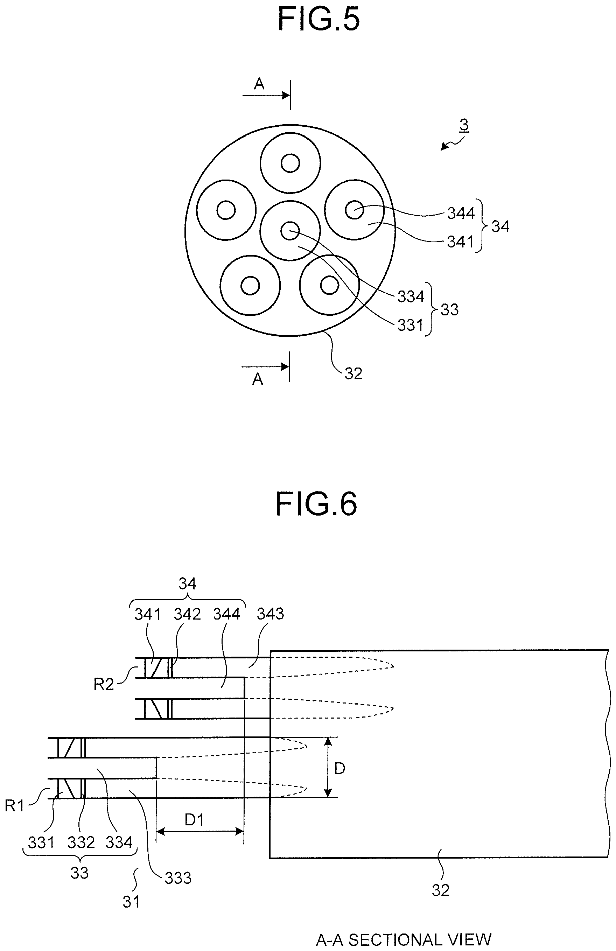

The combustor 3 of the gas turbine having a plurality of premixed gas generators 33 and 34 can use a configuration in which an premixed gas generator outlet of at least one of the premixed gas generators is located upstream of premixed gas generator outlets of the other premixed gas generators in the axial direction of the combustor 3 (see Figs. 5 and 6). According to this configuration, the premixed gas generator outlet 333 of the at least one premixed gas generator 33 is shifted in the axial direction of the combustor 3 with respect to the premixed gas generator outlets 343 of the outer premixed gas generators 34. Consequently, the total length of the combustion flame increases. This causes the combustion flame to generate heat at distributed positions, and thus provides an advantage of suppressing generation of combustion oscillation.

For example, according to this modification, the combustor 3 has a single unit of the inner premixed gas generator 33 and five units of the outer premixed gas generators 34 (see Fig. 5). The premixed gas generator 33 (34) includes the swirler vane 331 (341) and the fuel injector 332 (342) placed about the premixed gas generator outlet 334 (344). The inner premixed gas generator 33 is placed on the central axis of the combustor 3. The outer premixed gas generators 34 are placed around the inner premixed gas generator 33. The premixed gas generator outlet 333 of the inner premixed gas generator 33 is located upstream of the premixed gas generator outlets 343 of the remaining outer premixed gas generators 34 in the axial direction of the combustor 3 (see Fig. 6). This causes the combustion flame to generate heat at distributed positions.

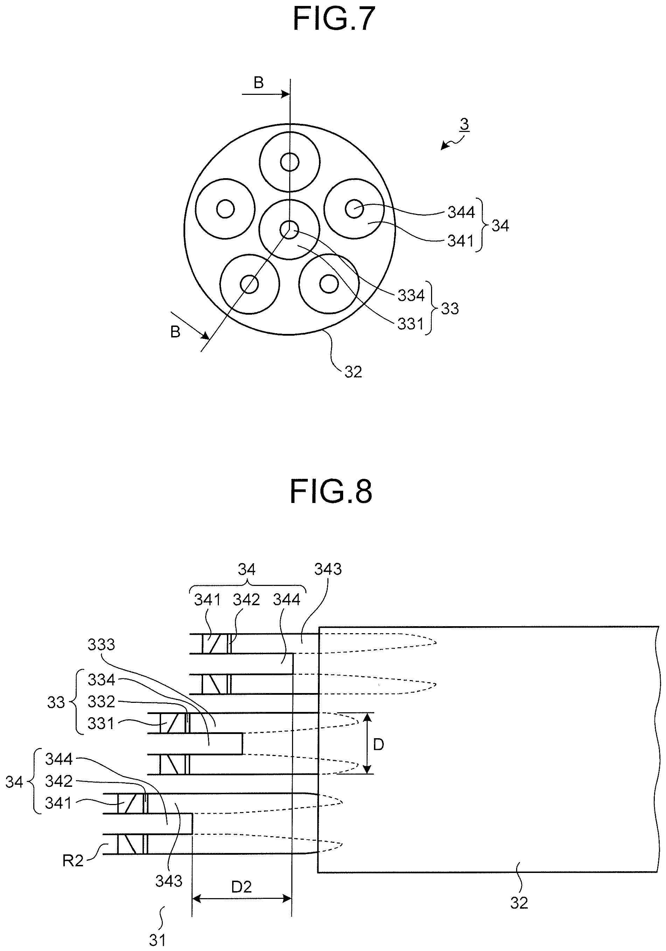

According to this modification, the premixed gas generator outlets 333 and 343 of the corresponding premixed gas generators 33 and 34 can be placed at different locations from each other in the axial direction of the combustor 3, respectively (see Figs. 7 and 8). In such a configuration, the premixed gas generator outlets 333 (343) of the corresponding premixed gas generators 33 and 34 are placed in a more distributed manner in the axial direction of the combustor 3, compared to the modification configuration described above. Thus, the combustion flame generates heat at distributed positions. This suppresses generation of combustion oscillation effectively.

Preferably, in the configurations described above, a distance D1 (D2) between the premixed gas generator 34 located upstream in the axial direction of the combustor 3 and the premixed gas generator 33 (34) located downstream in the axial direction of the combustor 3 (a distance between distal ends of the premixed gas generator outlets 334 (344)) has a relationship relative to a diameter D of the premixed gas generator 33 (34), which is expressed as D1/D (D2/D). This ensures appropriate combustion of the combustion flame.

INDUSTRIAL APPLICABILITY

As described above, the combustor of a gas turbine according to the present invention is useful for suppressing generation of combustion oscillation.

## Claims

1. A combustor (3) of a gas turbine (1) comprising:

   at least a pair of premixed gas generators (33,34) including an inner premixed gas generator (33) and an outer premixed gas generator (34) for producing a combustion flame;
   an inner cylinder (31) that has therein the premixed gas generators (33,34); and
   a transition piece (32) for connecting the inner cylinder (31) to an inlet (41) of a turbine (4), wherein
   the outer premixed gas generator (34) is placed outward of the inner premixed gas generator (33) in the radial direction of the combustor (3) and surrounds an outer circumference of the inner premixed gas generator (33),
   the inner premixed gas generator (33) and the outer premixed gas generator (34) are placed with a cylindrical swirler ring (35) interposed therebetween,
   a premixed gas generator outlet (333) of the inner premixed gas generator (33) is located upstream of a premixed gas generator outlet (343) of the outer premixed gas generator (34) in the axial direction of the combustor (3),
   the premixed gas generator outlets (333,343) of the premixed gas generators (33,34) respectively have a circumferential wall surface, and a part of the circumferential wall surface which is located outward in a radial direction of the combustor (3), extends further in an axial direction of the combustion flame than a part of the circumferential wall surface which is located inward in the radial direction of the combustor (3),
   an inner circumferential surface of the swirler ring (35) forms the part of the circumferential wall surface of the inner premixed gas generator (33) which is located inward in the radial direction of the combustor (3) and which extends steplessly from the premixed gas generator outlet (333) of the inner premixed gas generator (33) in the axial direction of the transition piece (32) up to a step constituted by the swirler ring (35) such that, in operation, the distal end of the combustion flame produced in the inner premixed gas generator (33) is located at an edge of the swirler ring (35), and
   an inner circumferential wall surface of the transition piece (32) forms the part of the circumferential wall surface of the outer premixed gas generator (34) which is located outward in the radial direction of the combustor (3), wherein the inner circumferential wall surface of the transition piece (32) extends steplessly from the premixed gas generator outlet (343) of the outer premixed gas generator (34) in the axial direction of the transition piece (32) up to a step (321) formed by widening the wall surface of the transition piece (32) in a stepped manner and which is provided at a position slightly upstream of a tip of a combustion flame which is produced, in operation, in the outer premixed gas generator (34).

2. The combustor (3) of a gas turbine (1) according to claim 1, wherein a distance L between the outer premixed gas generator (34) and the inlet (41) of the turbine (4) and a distance L1 between the premixed gas generator outlet (333) of the inner premixed gas generator (33) and the premixed gas generator outlet (343) of the outer premixed gas generator (34) have a relationship expressed as

$$0.2 \leq L1/L.$$

## Patentansprüche

1. Eine Brennkammer (3) einer Gasturbine (1) mit:

   mindestens einem Paar von Vorgemischgasgeneratoren (33,34) einschließlich einem inneren Vorgemischgasgenerator (33) und einem äußeren Vorgemischgasgenerator (34) zum Erzeugen einer Verbrennungsflamme,
   einem inneren Zylinder (31), der darin die Vorgemischgasgeneratoren (33,34) aufnimmt, und
   einem Übergangsstück (32) zum Verbinden des inneren Zylinders (31) mit einem Einlass (41) einer Turbine (4), wobei
   der äußere Vorgemischgasgenerator (34) außerhalb des inneren Vorgemischgasgenerators (33) in der Radialrichtung der Brennkammer (3) angeordnet ist und einen äußeren Umfang des inneren Vorgemischgasgenerators (33) umgibt,
   der innere Vorgemischgasgenerator (33) und der äußere Vorgemischgasgenerator (34) mit einem dazwischen eingefügten zylindrischen Verwirbelungsring (35), angeordnet sind,
   ein Vorgemischgasgeneratorauslass (333) des inneren Vorgemischgasgenerators (33) sich stromauf eines Vorgemischgasgeneratorauslasses (343) des äußeren Vorgemischgasgenerators (34) in der Axialrichtung der Brennkammer (3) befindet,
   die Vorgemischgasgeneratorauslässe (333, 343) der Vorgemischgasgeneratoren (33, 34) jeweils eine Umfangswandfläche haben, und ein Teil der Umfangswandfläche, der sich in einer Radialrichtung der Brennkammer (3) außerhalb befindet, sich weiter in einer Axialrichtung der Verbrennungsflamme erstreckt als ein Teil der Umfangswandfläche, die sich in der Radialrichtung der Brennkammer (3) innerhalb befindet,

wobei eine innere Umfangsfläche des Verwirbelungsrings (35) den Teil der Umfangswandfläche des inneren Vorgemischgasgenerators (33) bildet, der sich in der Radialrichtung der Brennkammer (3) innerhalb befindet und der sich stufenlos von dem Vorgemischgasgeneratorauslass (333) des inneren Vorgemischgasgenerators (33) in der Axialrichtung des Übergangsstücks (32) bis zu einer Stufe erstreckt, die durch den Verwirbelungsring (35) gebildet ist, derart, dass im Betrieb das distale Ende der in dem inneren Vorgemischgasgenerator (33) gebildeten Verbrennungsflamme sich an einem Rand bzw. einer Kante des Verwirbelungsrings (35) befindet, und

wobei eine innere Umfangswandfläche des Übergangsstücks (32) den Teil der Umfangswandfläche des äußeren Vorgemischgasgenerators (34) bildet, der sich in der Radialrichtung der Brennkammer (3) außerhalb befindet, wobei die innere Umfangswandfläche des Übergangsstücks (32) sich stufenlos von dem Vorgemischgasgeneratorauslass (343) des äußeren Vorgemischgasgenerators (34) in der Axialrichtung des Übergangsstücks (32) bis zu einer Stufe (321) erstreckt, die durch Aufweiten der Wandfläche des Übergangsstücks (32) in einer gestuften Weise gebildet ist und die an einer Position vorgesehen ist, die sich geringfügig stromauf eines Vorderendes bzw. einer Spitze einer Verbrennungsflamme befindet, die im Betrieb in dem äußeren Vorgemischgasgenerator (34) erzeugt wird.

2. Die Brennkammer (3) einer Gasturbine (1) gemäß Anspruch 1, wobei eine Distanz L zwischen dem äußeren Vorgemischgasgenerator (34) und dem Einlass (41) der Turbine (4) und eine Distanz L1 zwischen dem Vorgemischgasgeneratorauslass (333) des inneren Vorgemischgasgenerators (33) und dem Vorgemischgasgeneratorauslass (343) des äußeren Vorgemischgasgenerators (34) eine Beziehung haben die wie folgt ausgedrückt ist:

$$0,2 \leq L1/L.$$

## Revendications

1. Chambre (3) de combustion d'une turbine (1) à gaz comprenant :

au moins une paire de producteurs (33, 34) de gaz prémélangé, comprenant un producteur (33) intérieur de gaz prémélangé et un producteur (34) extérieur de gaz prémélangé, pour produire une flamme de combustion ;

un cylindre (31) intérieur, qui a, à l'intérieur, les producteurs (33, 34) de gaz prémélangé et une pièce (32) de transition pour relier le cylindre (31) intérieur à une entrée (41) d'une turbine (4), dans laquelle

le producteur (34) extérieur de gaz prémélangé est placé vers l'extérieur du producteur (33) intérieur de gaz prémélangé, dans la direction radiale de la chambre (3) de combustion et entoure une circonférence extérieure du producteur (33) intérieur de gaz prémélangé,

le producteur (33) intérieur de gaz prémélangé et le producteur (34) extérieur de gaz prémélangé sont placés en ayant un anneau (35) cylindrique de tourbillonnement interposé entre eux, une sortie (333), pour le gaz prémélangé du producteur (33) intérieur de gaz prémélangé, est placée en amont d'une sortie (343) pour du gaz prémélangé du producteur (34) extérieur de gaz prémélangé, dans la direction axiale de la chambre (3) de combustion,

les sorties (333, 343), pour le gaz prémélangé des producteur (33, 34) de gaz prémélangé, ont respectivement une surface de paroi circonférentielle et une partie de la surface de paroi circonférentielle, qui est placée vers l'extérieur dans une direction radiale de la chambre (3) de combustion, s'étend plus loin dans une direction axiale de la flamme de combustion, qu'une partie de la surface de paroi circonférentielle, qui est placée vers l'intérieur, dans la direction radiale de la chambre (3) de combustion,

une surface circonférentielle intérieure de l'anneau (35) de tourbillonnement forme la partie de la surface de paroi circonférentielle du producteur (33) intérieur de gaz prémélangé, qui est placé, vers l'intérieur dans la direction radiale de la chambre (3) de combustion et qui s'étend, sans échelon, de la sortie (333), pour du gaz prémélangé producteur (33) intérieur de gaz prémélangé, dans la direction axiale de la pièce (32) de transition, jusqu'à un épaulement constitué par l'anneau (35) de tourbillonnement, de manière à ce que, en fonctionnement, l'extrémité distale de la flamme de combustion, produite dans le producteur (3) intérieur de gaz prémélangé, soit placée à un bord de l'anneau (35) de tourbillonnement et

une surface intérieure de la paroi circonférentielle de la pièce (32) de transition forme la partie de la surface de paroi circonférentielle du producteur (34) extérieur de gaz prémélangé, qui est placé vers l'extérieur dans la direction radiale de la chambre (3) de combustion, la surface intérieure de la paroi circonférentielle de la pièce (32) de transition s'étendant, sans épaulement, de la sortie (343) pour du gaz prémélangé du producteur (34) extérieur de gaz prémélangé, dans la direction axiale de la pièce (32) de transition, jusqu'à un épaulement (321), formé par élargissement de la surface de paroi de la pièce (32) de transition, à la manière d'un épaulement et qui est prévu en une position légèrement en amont d'une pointe d'une flamme de combustion qui est produite, en fonctionnement, dans le producteur (34) extérieur de gaz prémélangé.

2. Chambre (3) de combustion d'une turbine (1) à gaz suivant la revendication 1, dans laquelle une distance L, entre le producteur (34) extérieur de gaz prémélangé et l'entrée (41) de la turbine (4), et une distance L1, entre la sortie (333) pour du gaz prémélangé du producteur (33) intérieur de gaz prémélangé, et la sortie (343) pour du gaz prémélangé du producteur (34) extérieur de gaz prémélangé, ont une relation exprimée par $0,2 \leq L1/L$.

# FIG.1

# FIG.2

# FIG.3

# FIG.4

# FIG.5

# FIG.6

A-A SECTIONAL VIEW

# FIG.7

# FIG.8

FIG.9

EP 2 230 459 B1

# FIG.10

EP 2 230 459 B1

**EP 2 230 459 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006300448 A
- EP 0281961 A1

- US 6418725 B1